(19) Europäisches Patentamt / European Patent Office / Office européen des brevets

(11) **EP 4 459 404 A1**

(12) **EUROPEAN PATENT APPLICATION**
published in accordance with Art. 153(4) EPC

(43) Date of publication:
**06.11.2024 Bulletin 2024/45**

(21) Application number: **22915971.0**

(22) Date of filing: **23.12.2022**

(51) International Patent Classification (IPC):
**G05B 23/02** (2006.01)   **G01M 99/00** (2011.01)
**G06N 20/00** (2019.01)   **G06N 3/02** (2006.01)

(52) Cooperative Patent Classification (CPC):
**G01M 99/00; G05B 23/02; G06N 3/02; G06N 20/00**

(86) International application number:
**PCT/JP2022/047718**

(87) International publication number:
**WO 2023/127748 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2021 JP 2021212492**

(71) Applicant: **Daicel Corporation**
**Osaka-shi, Osaka 530-0011 (JP)**

(72) Inventors:
• **YAMANO, Koichi**
  **Tokyo 108-8230 (JP)**
• **OKA, Hiroki**
  **Tokyo 108-8230 (JP)**
• **TAMURA, Kazumi**
  **Tokyo 108-8230 (JP)**
• **MURAKAMI, Yusaku**
  **Tokyo 108-8230 (JP)**
• **TAKEMURA, Kazutoshi**
  **Tokyo 108-8230 (JP)**

(74) Representative: **Grünecker Patent- und Rechtsanwälte**
**PartG mbB**
**Leopoldstraße 4**
**80802 München (DE)**

(54) **ABNORMALITY DETECTION DEVICE, ABNORMALITY DETECTION METHOD, AND ABNORMALITY DETECTION PROGRAM**

(57)   Performance to identify a cause of abnormal irregularity in a production facility is improved. An abnormality detection device includes a data acquisition unit that reads, from a storage device storing image data being continuously output by an imaging device included in a production facility and process data being continuously output by a sensor included in the production facility, the image data and the process data, an abnormality determination unit that calculates an image abnormality degree by using a model obtained by learning a tendency of a feature amount of the image data in a normal state and a feature amount of the image data acquired by the data acquisition unit, and calculates a sensor value abnormality degree indicating a degree of irregularity of the process data read by the data acquisition unit, and a cause diagnosis unit that outputs, based on causal relation information defining an association of a causal relation between a cause and a combination of the sensor value abnormality degree and the image abnormality degree, the cause calculated by the abnormality determination unit.

EP 4 459 404 A1

ABNORMALITY DETERMINATION DEVICE

COMMUNICATION I/F — 11

STORAGE DEVICE — 12

INPUT/OUTPUT DEVICE — 13

PROCESSOR — 14

DATA ACQUISITION UNIT — 141

PREPROCESSING UNIT — 142

LEARNING PROCESSING UNIT — 143

ABNORMALITY DETERMINATION UNIT — 144

CAUSE DIAGNOSIS UNIT — 145

OUTPUT CONTROL UNIT — 146

15

# FIG. 19

## Description

Technical Field

The present disclosure relates to an abnormality detection device, an abnormality detection method, and an abnormality detection program.

Background Art

In the related art, there are proposed technologies for estimating a cause of an abnormality by using operation data received from a plant. For example, there is proposed a technology in which weighting of an occurrence probability of a first abnormal event that occurred in the past is made greater than weighting of an occurrence probability of a second abnormal event that has not occurred to estimate a cause of a sign of an abnormality (Patent Document 1).

Citation List

Patent Document

Patent Document 1: JP 2018-109851 A

Summary of Invention

Technical Problem

In general, it is desirable to prevent abnormal irregularity to suppress an impact on safety, stability, quality of products, cost, and the like in a production facility. The present technology aims to improve performance to identify a cause of abnormal irregularity in a production facility.

Solution to Problem

Examples of an abnormality detection device according to the present disclosure include the following.
An abnormality detection device, including,

a data acquisition unit configured to read, from a storage device storing image data being continuously output by an imaging device included in a production facility and process data being continuously output by a sensor included in the production facility, the image data and the process data,
an abnormality determination unit configured to calculate an image abnormality degree by using a model obtained by learning a tendency of a feature amount of image data in a normal state of the image data and a feature amount of the image data acquired by the data acquisition unit, and calculate a sensor value abnormality degree indicating a degree of irregularity of the process data read by the data acquisition unit, and

a cause diagnosis unit configured to output, based on causal relation information defining an association of a causal relation between a cause and a combination of the sensor value abnormality degree and the image abnormality degree, the cause corresponding to the sensor value abnormality degree and the image abnormality degree calculated by the abnormality determination unit.

The abnormality detection device described above, in which
the production facility is a manufacturing plant of a granular product, and
the imaging device is provided in a tank of the manufacturing plant.
The abnormality detection device described above, in which

the abnormality determination unit is configured to
use the image data to output, by a convolutional deep learning model that outputs feature amounts of a plurality of levels from a local feature to a global feature, the feature amounts of the plurality of levels; and
use a model obtained by learning an average of a feature amount in a normal state for each of the plurality of levels by using a plurality of pieces of the image data in the normal state, to calculate, as the image abnormality degree, a corrected abnormality degree obtained by correcting, based on smoothness of texture of the image data read by the data acquisition unit, a divergence degree based on a difference between the feature amount of each of the plurality of levels and the average of the feature amount of a corresponding level.

The abnormality detection device described above, in which
the convolutional deep learning model is EfficientNet,

the divergence degree is calculated by GaussianAD, and
the corrected abnormality degree is calculated by multiplying the divergence degree by a value based on a Gray-Level Co-Occurrence Matrix (GLCM).

The abnormality detection device described above, in which
the model is created by using a pseudo-abnormal image created by smoothing the image data in the normal state.
The abnormality detection device described above, in which

the model is generated by learning a feature of a region in which an image of the product on a stirring blade provided in the tank is captured, and estimates a region in which an image of the product is captured in the image data by using segmentation, and
the abnormality determination unit obtains a maximum value of a size of a region in which an image of the product is captured on a rotation period basis of the stirring blade, and determines that the smaller the maximum value is, the higher the image abnormality degree is.

The abnormality detection device described above, in which
the abnormality determination unit calculates the sensor value abnormality degree in accordance with whether a direction of divergence with respect to a predetermined reference is positive or negative.

The abnormality detection device described above, in which

the causal relation information defines process data to be used for calculation of the sensor value abnormality degree, by a timing, a period of time, or an interval in a stage performed at the production facility for each piece of the process data output by the sensor, and
the abnormality determination unit calculates the sensor value abnormality degree by using a value extracted based on the timing, the period of time, or the interval defined by the causal relation information from among pieces of the process data read by the data acquisition unit.

An abnormality detection method executed by a computer, the abnormality detection method including,

reading, from a storage device storing image data continuously output by an imaging device included in a production facility, the image data;
reading, from a storage device storing process data continuously output by a sensor included in the production facility, the process data;
calculating an image abnormality degree by using a model obtained by learning a tendency of a feature amount of image data in a normal state of the image data and a feature amount of the image data being read, and calculating a sensor value abnormality degree indicating a degree of irregularity of the process data being read, and
outputting, based on causal relation information defining an association of a causal relation between a cause and a combination of the sensor value abnormality degree and the image abnormality degree, the cause corresponding to the sensor value abnormality degree and the image abnormality degree being calculated.

An abnormality detection program causing a computer to execute,

reading, from a storage device storing image data continuously output by an imaging device included in a production facility, the image data;

reading, from a storage device storing process data continuously output by a sensor included in the production facility, the process data;
calculating an image abnormality degree by using a model obtained by learning a tendency of a feature amount of image data in a normal state of the image data and a feature amount of the image data being read, and calculating a sensor value abnormality degree indicating a degree of irregularity of the process data being read; and
outputting, based on causal relation information defining an association of a causal relation between a cause and a combination of the sensor value abnormality degree and the image abnormality degree, the cause corresponding to the sensor value abnormality degree and the image abnormality degree being calculated.

Note that the contents described in Solution to Problem can be combined as much as possible without departing from the problems and technical idea of the present disclosure. Furthermore, the contents of Solution to Problem can be provided as a system including a device, such as a computer, or a plurality of devices, a method performed by the computer, or a program executed by the computer. Note that a recording medium for storing the program may be provided.

Advantageous Effects of Invention

According to the disclosed technology, it is possible to improve the identification accuracy of a cause of abnormal irregularity in a production facility.

Brief Description of Drawings

FIG. 1 is a diagram illustrating an example of a system according to an embodiment of the present invention.
FIG. 2 is a schematic diagram illustrating an example of a process performed by equipment included in a plant.
FIG. 3 is a diagram illustrating an example of equipment included in a plant.
FIG. 4 is a diagram for explaining an example of process data in a batch stage.
FIG. 5 is a table showing an example of a stage line definition table set in advance.
FIG. 6 is a table showing an example of a tag definition table set in advance.
FIG. 7 is a diagram for explaining an example of process data in a continuous stage.
FIG. 8 is a table showing an example of traceability information.
FIG. 9 is a diagram for explaining correspondence between the process data in the continuous stage and a product serial number in the batch stage.

FIG. 10 is a table showing an example of information registered in advance in a knowledge base.

FIG. 11 is a diagram illustrating an example of a logic tree representing a relationship between an irregularity and a cause of the irregularity.

FIG. 12 is a graph for explaining synchronization processing of process data.

FIG. 13 is a graph for explaining an example of calculating an abnormality degree by a distance from a reference for time-series data.

FIG. 14 is a graph for explaining an example of calculating an abnormality degree by a distance from a reference in consideration of a positive-negative direction for the time-series data.

FIG. 15 is a diagram for explaining abnormality detection using an autoencoder.

FIG. 16 is a diagram for explaining EfficientNet-B0.

FIG. 17 is a graph showing a relationship between GLCM features and the image abnormality degree described above.

FIG. 18 is an example of images in a retention box during normal time and abnormal time.

FIG. 19 is a block diagram illustrating an example of a configuration of an abnormal irregularity cause identifying device.

FIG. 20 is a processing flow chart illustrating an example of learning processing performed by the abnormal irregularity cause identifying device.

FIG. 21 is a table showing an example of an action table.

FIG. 22 is a processing flow chart illustrating an example of the abnormality detection processing performed by the abnormal irregularity cause identifying device.

FIG. 23 is a diagram illustrating an example of a screen output to an input/output device.

FIG. 24 is a diagram illustrating another example of the screen output to the input/output device.

Description of Embodiments

An embodiment of an abnormal irregularity cause identifying device (abnormality detection device) will be described below with reference to the drawings.

Embodiment

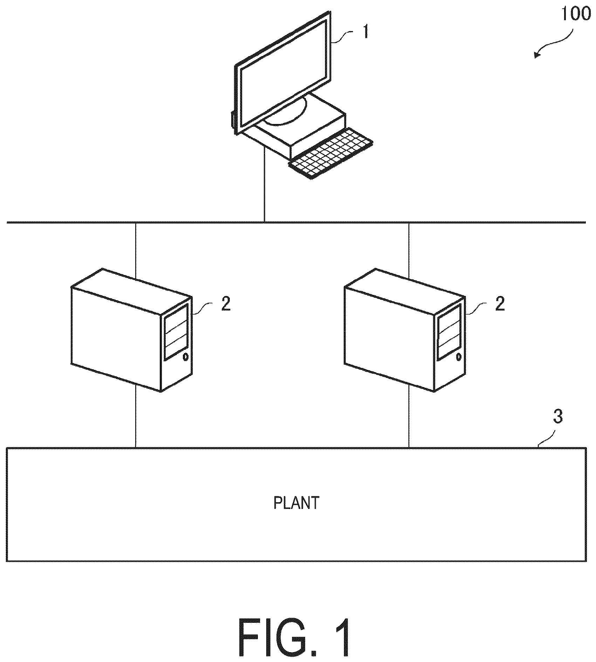

FIG. 1 is diagram illustrating an example of a system according to the present embodiment. A system 100 includes an abnormal irregularity cause identifying device 1, control stations 2, and a plant 3. The system 100 is, for example, a Distributed Control System (DCS) and includes a plurality of the control stations 2. That is, a control system of the plant 3 is divided into a plurality of sections, and distributed control is performed by the control stations 2 for each of the control sections. The control station 2 is an existing facility in the DCS, receives state signals output from sensors or the like included in the plant 3, or outputs a control signal to the plant 3. Based on the control signal, actuators such as valves and other equipment included in the plant 3 are controlled.

The abnormal irregularity cause identifying device 1 acquires a state signal (process data) of the plant 3 via the control station 2 and image data obtained from an imaging device such as Industrial Television (ITV). The process data includes a temperature, pressure, a flow rate, and the like of a processing target that is a raw material or a product, a set value for determining an operating condition of the equipment included in the plant 3, or the like. The image data corresponds to each of a plurality of frames continuously output from the imaging device, for example. The abnormal irregularity cause identifying device 1 may perform feature extraction processing on the image data to obtain a predetermined feature amount. Furthermore, the abnormal irregularity cause identifying device 1 creates an abnormality detection model based on a knowledge base that stores a correspondence relationship between an assumed cause and an influence appearing as an abnormality, for example. For example, a model for identifying an abnormal irregularity, a sign thereof, and a cause thereof is created based on a technique, which is created based on the knowledge base, to detect a deviation from an acceptable range for change in process data. In the model, a feature amount obtained from the image data is used in addition to the change in the process data to perform the determination. The abnormal irregularity cause identifying device 1 can detect the occurrence of the abnormal irregularity or a sign thereof by using the model, the process data, and the image data. Furthermore, the abnormal irregularity cause identifying device 1 may obtain, for example, a candidate for an operating condition for suppressing the abnormal irregularity based on a table that stores causes of the abnormal irregularity and actions for handling the causes and the identified cause and may propose the candidate to the user.

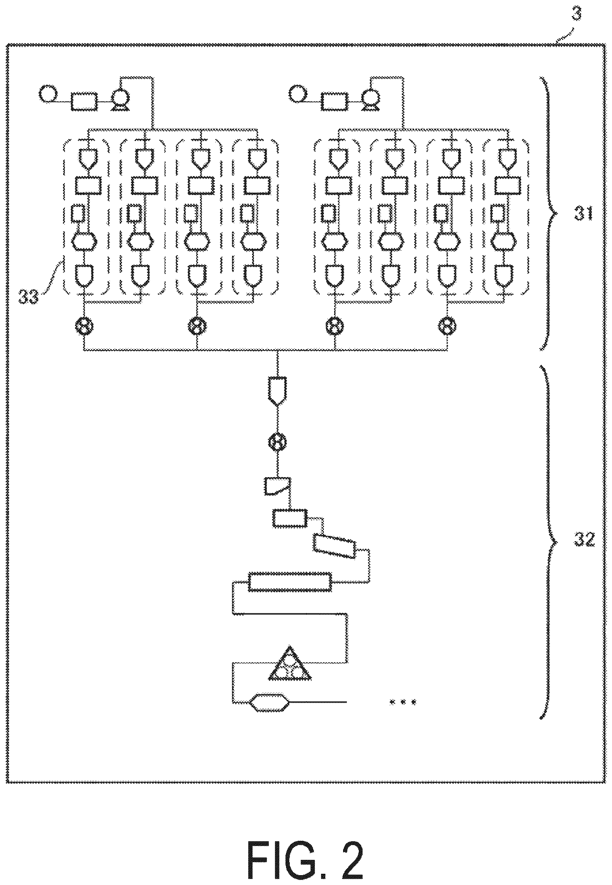

FIG. 2 is a schematic diagram illustrating an example of a process performed by equipment included in a plant. In the present embodiment, a manufacturing plant for producing a resin such as cellulose acetate will be described as an example. The manufacturing process may include a batch stage 31 and a continuous stage 32. In the batch stage 31, processing targets are sequentially processed on a transaction-to-transaction basis by using a predetermined transaction, and for example, processing operations such as receiving, holding, and emitting of a raw material with respect to each equipment are performed in order. In the continuous stage 32, successively introduced processing targets are continuously processed, and for example, processing such as receiving, holding, and emitting of a raw material are performed in parallel. Furthermore, the process can include a plurality of sequences 33 that perform the same processing in parallel.

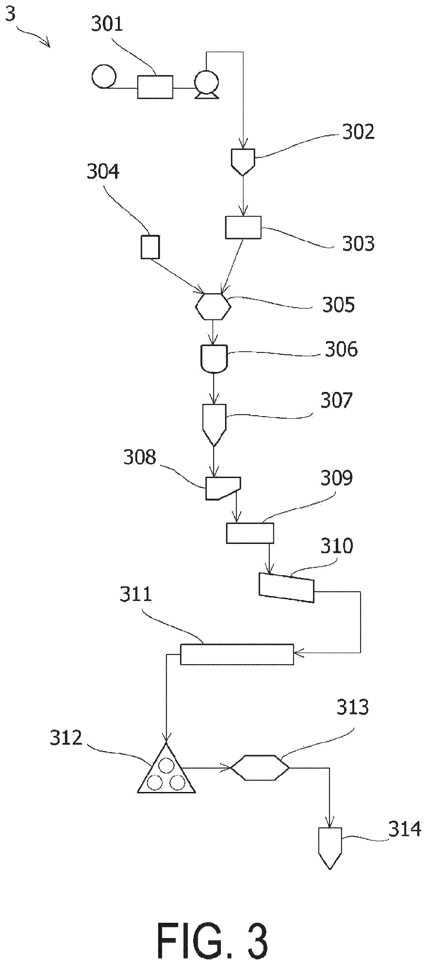

FIG. 3 is a schematic diagram illustrating an example of a plant. The equipment for performing each processing includes, for example, a reactor, a distillation device, a heat exchanger, a compressor, a pump, a tank, and the like, and these are connected via pipes. Furthermore, sensors, valves, and the like are provided at predetermined positions of the equipment and the pipes. The sensor can include a thermometer, a flow meter, a pressure gauge, a level meter, a densitometer, and the like. Furthermore, the sensor monitors the operating state of each equipment and outputs a state signal. Furthermore, it is assumed that the sensor included in the plant 3 is attached with a "tag", which is identification information for identifying each of the sensors. That is, a type of the process data can be identified based on the tag. The abnormal irregularity cause identifying device 1 and the control station 2 manage input/output signals to/from each equipment, based on the tag.

FIG. 3 is a diagram illustrating an example of equipment included in a plant. For example, the plant 3 for producing a resin includes a crusher (shredder) 301, a cyclone 302, a pretreatment device 303, a precooler 304, a reactor 305, an aging tank 306, a retention tank (RT) 307, a precipitation device (precipitator) 308, a retention box (hardening tank) 309, a solid-liquid separator 310, a washing device 311, a dehydrator 312, a dryer 313, and a product silo 314.

When receiving a raw material such as cellulose (pulp), the crusher 301 executes a defibering stage of disentangling the raw material into a flocculent state. The disentangled raw material is transferred to the pretreatment device 303 via the cyclone 302. The pretreatment device 303 performs a pretreatment stage.

Further, the precooler 304 performs a precooling stage of cooling a predetermined mixed liquid to be reacted with the raw material. The reactor 305 receives the raw material treated in the pretreatment stage and the mixed liquid cooled in the precooling stage. In addition, at the reactor 305, an acetylation stage is conducted.

In the aging tank 306, steam is introduced into a solution (dope) in which the acetylation reaction is completed to raise the temperature and perform an aging stage. The above-described processing corresponds to the batch stage 31 illustrated in FIG. 2. In the batch stage 31, processes belonging to the plurality of sequences 33 are sequentially executed by the above-described equipment. The subsequent processing corresponds to the continuous stage 32 in which an intermediate product is accumulated in the RT 307 and continuously processed.

The precipitation device 308 performs a precipitation stage of extruding the dope for which aging processing is completed through a perforated plate to deposit (precipitate) the resin. In this stage, cellulose acetate is deposited, for example. The retention box 309 performs a hardening stage in which the precipitated resin is retained and further solidified. In the present embodiment, it is assumed that data obtained by capturing an image of the resin in the retention box 309 is acquired and used to identify the cause of an abnormal irregularity.

The solid-liquid separator 310 performs a solid-liquid separation (acid removal) stage of separating the precipitated resin from an aqueous solution. The washing device 311 performs a washing stage of washing the resin containing an acid component with pure water. The acid component is removed in the washing stage.

The dehydrator 312 performs a dehydration stage of removing the water content in the resin after the washing. The dehydration stage can reduce the burden on the dryer in the subsequent stage. The dryer 313 performs a drying stage of drying the resin after dehydration. The dried resin is accumulated in the product silo 314 and then shipped.

Batch Stage

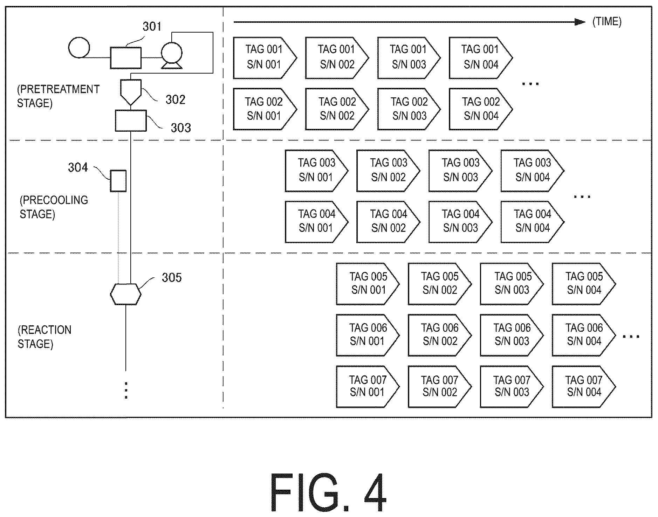

FIG. 4 is a diagram for explaining an example of process data in the batch stage. The left column of FIG. 4 indicates a part of the processes of the batch stage 31 illustrated in FIG. 2. Specifically, the processes include the crusher 301, the cyclone 302, the pretreatment device 303, the precooler 304, and the reactor 305. Furthermore, the processes are classified into a pretreatment stage, a precooling stage, and a reaction stage. The right column of FIG. 4 indicates an example of process data acquired in each process. In the pretreatment stage, pieces of time-series data are acquired from sensors or imaging devices with tags 001 and 002. In the precooling stage, pieces of time-series data are acquired from sensors with tags 003 and 004. In the reaction stage, pieces of time-series data are acquired from sensors with tags 005, 006, and 007. Furthermore, in the batch stage, a processing target associated with a product serial number (also referred to as a "S/N", "batch number", "management number") is intermittently processed. That is, the product serial number is identification information for identifying each of the processing targets to be collectively processed in the batch stage. As illustrated in FIG. 4, time-series data related to a processing target having a subsequent product serial number is obtained over time. In the present embodiment, each of the control stations 2 manages a product serial number and a step indicating a phase of processing in each of the subdivided stages constituting the batch stage. Note that in a case where a step is reset by a Programmable Logic Controller (PLC or sequencer) in the plant 3 connected to the control station 2, the product serial number of the process data output from the control station 2 may be employed as appropriate (e.g., after a set time elapses after the step is switched in the PLC) in accordance with a communication timing between the control station 2 and the plant 3. Furthermore, the set time may be set for each production line or for each subdivided stage.

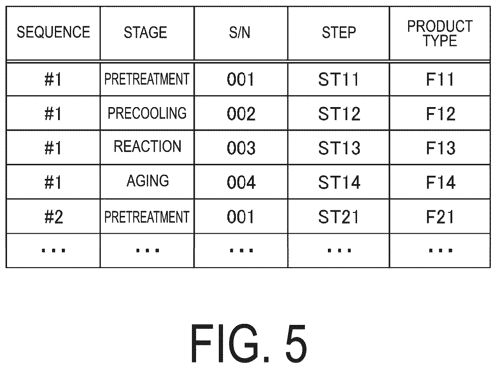

FIG. 5 is a table showing an example of a stage line definition table set in advance. In the stage line definition table, for each sequence and each stage, a product serial number, definition of a step indicating a phase of processing in each stage, and a type of a processing target to be processed in each stage are registered. The stage line definition table may also be a so-called database table or may also be a file having a predetermined format such as CSV. Furthermore, the stage line definition table is also created by a user in advance and read by the abnormal irregularity cause identifying device 1.

The stage line definition table includes attributes of a sequence, a stage, S/N, a step, and a product type. In the field of the sequence, identification information for identifying a sequence of a process is registered. In the field of the stage, identification information indicating subdivided stages in the batch stage is registered. In the field of S/N, a product serial number that is identification information for identifying each of the processing targets to be collectively processed in the batch stage is registered. In the field of the step, definition of timing of each of the plurality of steps indicating a phase of processing in the stage is registered. In the field of the product type, the type of processing target is registered.

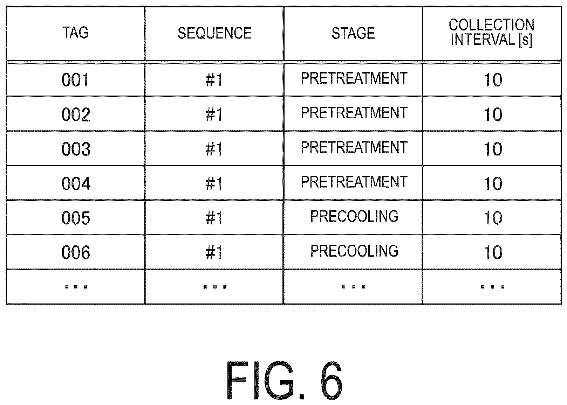

FIG. 6 is a table showing an example of a tag definition table set in advance. The tag definition table defines an acquisition timing of process data or image data obtained from a sensor or an imaging device corresponding to each tag. Note that the tag definition table may also be a so-called database table or may also be a file having a predetermined format such as Comma Separated Values (CSV). Furthermore, the tag definition table is created by a user in advance and read by the abnormal irregularity cause identifying device 1.

The tag definition table includes attributes of a tag, a sequence, a stage, and a collection interval. In the field of the tag, a tag that is identification information of a sensor or an imaging device is registered. In the field of the sequence, identification information for identifying a sequence of a process is registered. In the field of the stage, identification information indicating subdivided stages in the batch stage is registered. In the field of the collection interval, information indicating an interval of acquiring an output value of a sensor or image data is registered.

Continuous Stage

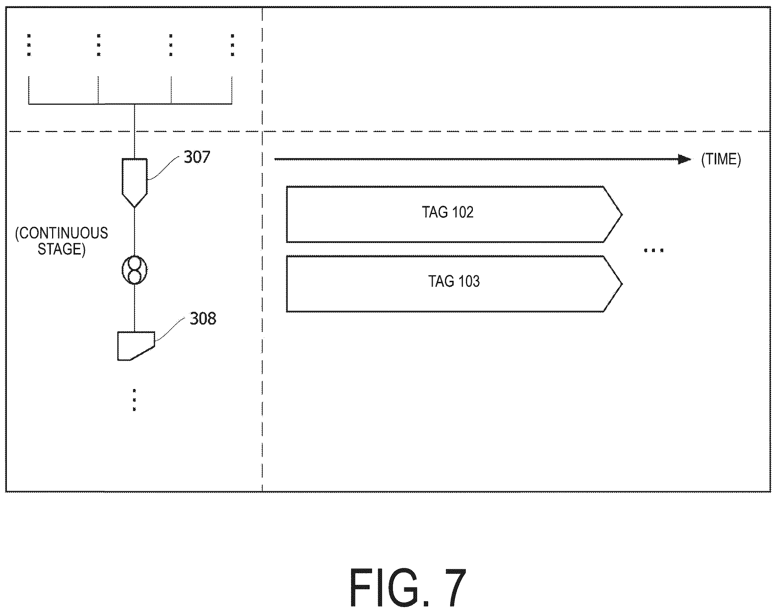

FIG. 7 is a diagram for explaining an example of process data in the continuous stage. The left column of FIG. 7 indicates a part of the processes of the continuous stage 32 illustrated in FIG. 2. Specifically, the process includes the RT 307 and the precipitation device 308. The right column of FIG. 7 indicates an example of process data acquired in each process. In the continuous stage 32, time-series data associated with the tag and not associated with the product serial number is continuously acquired from sensors or imaging devices. In the continuous stage, the time-series data is acquired from each of the sensors or the imaging devices with tags 102 and 103. In the continuous stage, the equipment continuously receives a processing target and continuously performs processing.

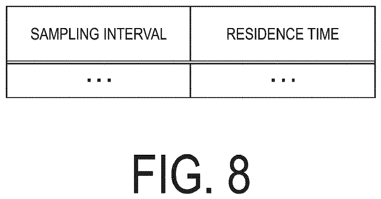

When the continuous stage is performed after the batch stage, the present embodiment uses traceability information set in advance by a user to associate a processing target in the batch stage with a processing target in the continuous stage. FIG. 8 is a table showing an example of the traceability information. The traceability information includes attributes of a sampling interval and a residence time. In the field of the sampling interval, a sampling interval for stage inspection by, for example, a sample reduction method in the continuous stage is registered. In the field of the residence time, a residence time of a processing target from the completion of the batch stage until the processing target reaches a process included in the continuous stage is registered.

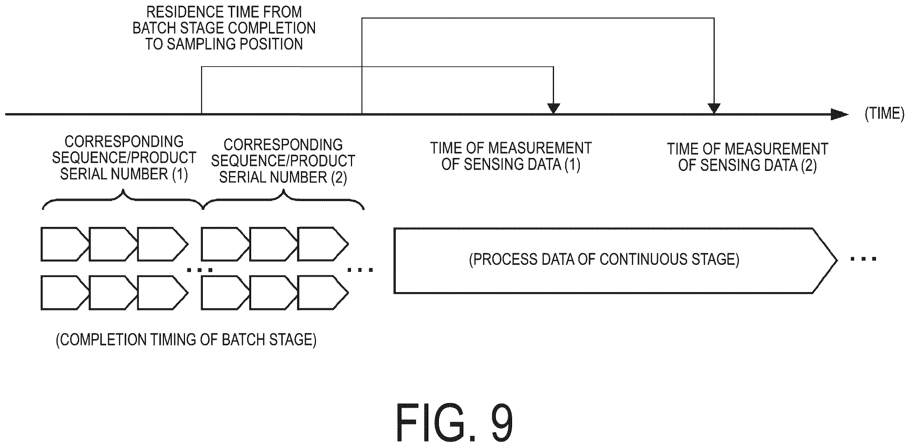

FIG. 9 is a diagram for explaining correspondence between the process data or the image data in the continuous stage and a product serial number in the batch stage. The process data or the image data is acquired at an interval set in the traceability information, for example. Furthermore, when the continuous stage is performed after the batch stage, a product by the batch stage completed in a predetermined period of time is introduced to a tank or the like as a processing target in the continuous stage. Accordingly, the process data in the continuous stage can be associated with a product serial number group whose completion time of the batch stage is included in a predetermined period of time by tracing back the residence time of the processing target from the completion of the batch stage to the measurement time by the sensor or the output of the image data by the imaging device. By such an association, when the batch stage and the continuous stage are continuously performed, the accuracy of the abnormality cause identification that uses process data in the batch stage can be improved.

As described above, the accuracy of identifying the abnormality cause can be improved by associating the product serial number in the batch processing with the measurement timing in the continuous stage.

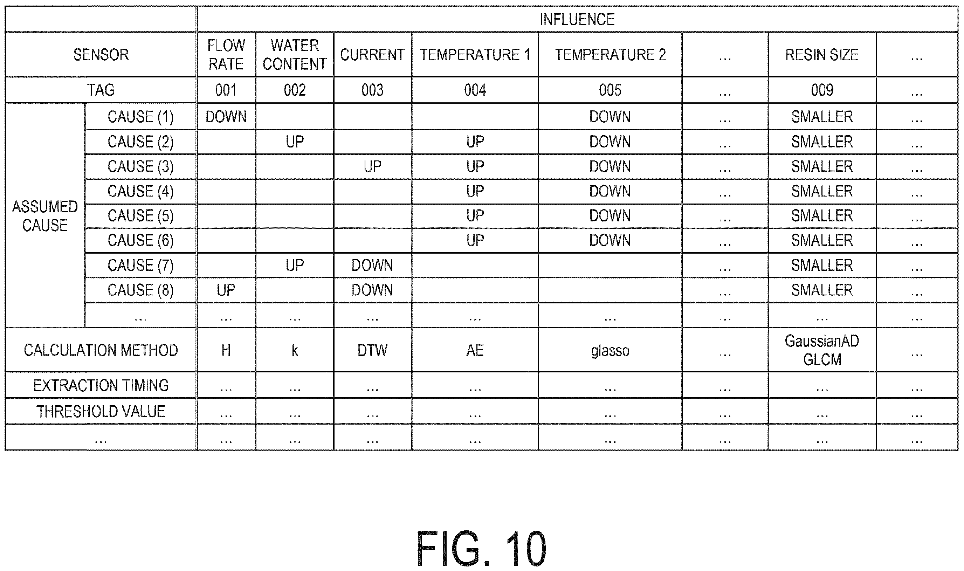

FIG. 10 is a table showing an example of information registered in advance in a knowledge base. The knowledge base is assumed to be stored in advance in the storage device of the abnormal irregularity cause identifying device 1. The table of FIG. 10 includes a column "influence" corresponding to each of the sensors or the imaging devices (tags) and a row indicating "assumed cause" of an irregularity. That is, a direction of variation of each value is registered in columns corresponding to the sensors or the image data affected by the causes such as "cause 1" or "cause 2" indicated in each row. In the knowledge base, the direction of variation is displayed as "up" representing an increase (rise) or "down" representing a decrease (reduction) of an output value of a sensor. Note that, as illustrated in FIG. 10, the combination of a cause and an influence is not limited to a one-to-one relationship. Further, a calculation method, an extraction timing, a threshold value used for abnormality determination, and the like of the process data are defined in association with each sensor. In a row of the calculation method, information indicating a calculation performed on an output value of each sensor is registered. Note that, in the present embodiment, the calculation is performed using a machine learning technique such as, for example, a Hotelling method, a k-nearest neighbor algorithm, DTW Barycenter Averaging, Autoencoder, graphical lasso, and EfficientNet, an abnormality detection technique such as GaussianAD, and a texture analysis method such as Gray-Level Co-Occurrence Matrix (GLCM). In a row of the extraction timing, information indicating a timing of extracting a value to be used for the abnormality determination among output values of sensors is registered. For example, in the batch processing, the timing may be defined by a step indicating a phase of processing in each stage, a certain period of time, a certain time point, or the like. In the continuous processing, the timing may be defined by the sampling interval, or the like, as illustrated in FIG. 8. In a row of the threshold value, a threshold value that is a reference for determining an abnormality in each abnormality determination technique is registered. The threshold value may include two values, that is, an upper limit and a lower limit, for example. As described above, the knowledge base defines a combination of causal relation between an event that becomes a cause and an influence that is an irregularity of process data resulting from the event. In addition, the combination of causal relation can be represented by a tree format, in which, by using an irregularity appearing as an influence as a root and an assumed cause of the irregularity as a leaf, events appearing in the course from the cause to the irregularity are connected in a hierarchical manner along time series.

It is assumed that the knowledge base is created in advance by a user based on, for example, Hazard and Operability Study (HAZOP). The HAZOP relates to, for example, detection means at a monitoring point by instrumentation equipment constituting a plant, a management range (upper and lower limit threshold values, which are alarm setting points), a deviation from the management range (an abnormality and an irregularity), a list of assumed causes of the deviation from the management range, a logic (detection means) to determine which of the assumed causes caused the deviation, an influence caused by the deviation, measures to be taken when the deviation has occurred, and an action for the measures, and is a technique to associate and comprehensively enumerate them. Note that in addition to the HAZOP, the knowledge base may be created based on Fault Tree Analysis (FTA), Failure Mode and Effect Analysis (FMEA), Event Tree Analysis (ETA), a technique based thereon, a technique similar thereto, contents extracted from results of hearings with operators, or contents extracted from work standards and technical standards. In the present embodiment, abnormality detection is performed based on a parameter that is assumed to have causal relation in the knowledge base.

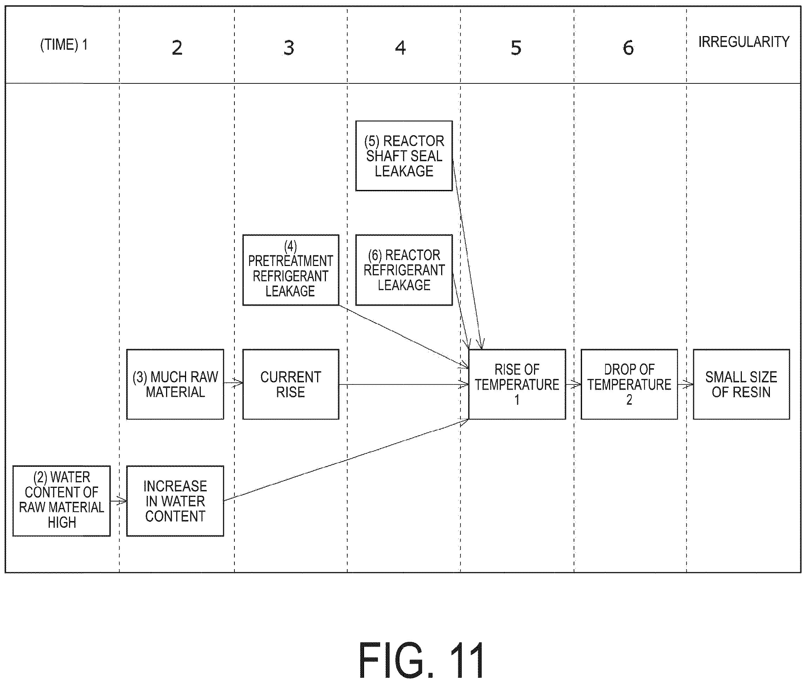

Based on the information set in the table as described above, the abnormal irregularity cause identifying device 1 extracts data of a predetermined timing among pieces of process data and image data acquired from the plant 3 and performs abnormality determination by a technique determined in advance. FIG. 11 is a diagram illustrating an example of a logic tree representing a relation between an irregularity and a cause thereof. The logic tree can be created based on the knowledge base shown in FIG. 10. Furthermore, in the logic tree in FIG. 11, an event that is upstream in a production stage and earlier in the time series is arranged on the left side, an event that is downstream in the production stage and later in the time series is arranged on the right side, and the events are connected in a hierarchical manner by using an arrow from the assumed cause to the irregularity appearing as an influence. In addition, in the logic tree, if there are a plurality of assumed causes for one irregularity in the knowledge base table, events are branched and connected, and events appearing in common in the course from the assumed causes to the irregularity are grouped together and displayed. A thick solid-line rectangle located at the upstream end of each branch corresponds to an assumed cause of the knowledge base table, to which numbers in parentheses in FIGS. 10 and 11 correspond. Furthermore, each thin solid-line rectangle corresponds to an influence of the knowledge base table and represents an event that can be observed by the process data. For each of such influences, calculation in accordance with a calculation method defined in the knowledge base table is performed. In addition, for each assumed cause, a model including a mathematical formula for performing the above-described calculation is defined, and it is possible to detect an abnormality or a sign thereof and support the cause identification by using the model.

Calculation Method

The above-described calculation may include, for example, the following techniques. Furthermore, the abnormal irregularity cause identifying device 1 may display these calculation results.

Hotelling Method ($T^2$ Method)

For example, assuming that a plurality of pieces of process data obtained from one sensor follow a predetermined probability density function, an average and a standard deviation of the population are estimated from a sample average and a sample standard deviation calculated by using the process data. The predetermined probability density function is, for example, a normal distribution. The abnormality degree (sensor value abnormality degree) that can be determined from a sensor value is determined based on a distance from the average of the population to the process data to be verified. For example, the sensor value abnormality degree is determined based on the square of the Mahalanobis distance. Note that an instantaneous value of the process data may be used, or the sensor value abnormality degree based on the Hotelling theory may be calculated by using a maximum value, a minimum value, an integrated value, a standard deviation, a derivative coefficient (inclination), or the like of the pieces of process data in a predetermined period of time. According to the Hotelling method, it is possible to detect an outlier from a predetermined reference.

k-nearest Neighbor Algorithm

The pieces of time-series process data obtained, for example, from one or more sensors are vectorized or converted into a matrix to calculate a distance between data pieces. The distance may be a Euclidean distance or may be a Mahalanobis distance or a Manhattan distance. The sensor value abnormality degree is determined in accordance with the distance from the data to be verified to the k-th nearest data. In the k-nearest neighbor algorithm, the abnormality degree is determined based on the relationship with other pieces of data. Thus, for example, in a case where a normal value can be classified into a plurality of clusters, it is possible to detect an outlier far from all of the plurality of clusters.

Dynamic Time Wrapping (DTW) Barycenter Averaging

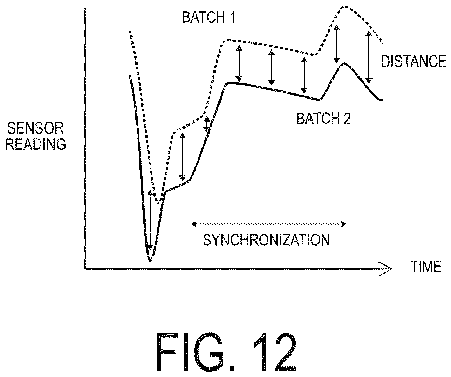

Based on a plurality of pieces of time-series data such as pieces of process data in different batch processing operations, average time-series data can be calculated. For example, for pieces of process data having different product serial numbers in a corresponding section in batch processing operations, a distance from each of the pieces of process data to the average time-series data can be calculated. FIG. 12 is a graph for explaining synchronization processing of process data. For individual values which are elements included in the pieces of time-series data of the batch processing operations having different product serial numbers, the shortest distances between values included in different pieces of time-series data are obtained in a round-robin manner, and then alignment is performed by sliding the time-series data in a time-axis direction in such a manner that an integrated value of the shortest distances becomes smallest. That is, based on the degree of similarity of the time-series data, the plurality of pieces of time-series data are synchronized. In this way, it becomes possible to superimpose and display a plurality of pieces of process data in such a manner that steps in the stage performed in the plant 3 correspond in chronological order. Subsequently, based on the integrated value of the distances between synchronized pieces of the time-series data, the sensor value abnormality degree is calculated by the k-nearest neighbor algorithm or the Hotelling theory. According to the DTW Barycenter Averaging, it is possible to detect an abnormality based on the degree of similarity between pieces of the time-series data.

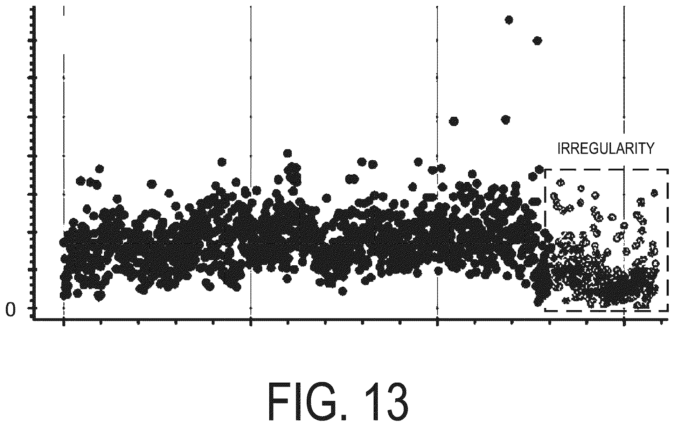

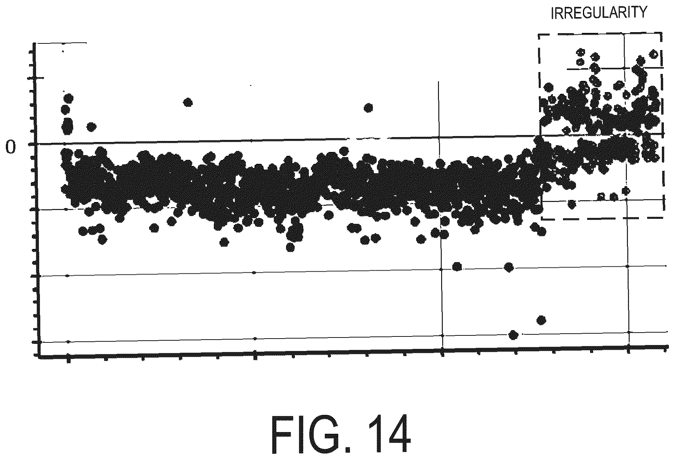

The sensor value abnormality degree having a positive or negative sign may be calculated for the divergence from a reference such as an average. FIG. 13 is a graph for explaining an example of calculating a sensor value abnormality degree by magnitudes of distances of pieces of time-series data from a reference. FIG. 14 is a table for explaining an example of calculating a sensor value abnormality degree by distances of the same pieces of time-series data from a reference in consideration of positive-negative directions. In each figure, for example, the vertical axis represents an extent of divergence from the average. In a portion indicated by a dashed-line rectangle, irregularities actually occur, but detection is difficult using only the values shown in the example in FIG. 13. On the other hand, in the example of FIG. 14, a tendency appears in which the positive-negative directions deviate reversely, and thus, the detection of the irregularities is facilitated.

For example, in the above-described Hotelling method, by determining the extent of divergence from the reference as a value having a positive or negative sign without squaring the distance, the sensor value abnormality degree as illustrated in FIG. 14 is obtained. In the DTW Barycenter Averaging or the like, for a characteristic point such as the local maximum value in the time-series data, for example, a positive or negative sign is determined by the following equation, and the calculated value is multiplied by the magnitude of the distance.

$$\text{Sign determination equation} = (\mu - x)/|\mu - x|$$

Note that $\mu$ is an average value (reference value) of training data, and x is process data to be verified. In this manner, according to the sign determination equation, it is possible to determine the sign representing the direction of divergence from the reference at the above time point in accordance with the magnitude relationship between the reference value of the time-series data at a predetermined time point and the process data to be verified at the corresponding time point. Furthermore, by using the value having a sign indicating the extent of divergence from the reference, the sensor value abnormality degree as illustrated in FIG. 14 can be obtained, and thus false detection can be suppressed. Further, as a characteristic point in the time-series data, in addition to the local maximum value, the local minimum value, a difference between process data at a time point and process data at another time point, or the like may be used.

Autoencoder

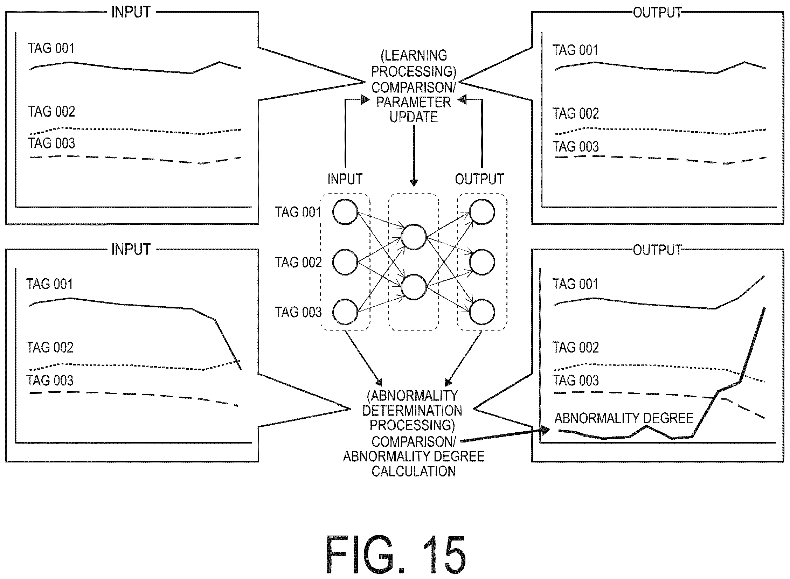

FIG. 15 is a diagram for explaining the abnormality detection by using an autoencoder. In this technique, the abnormality determination is performed based on characteristics of the relationship of pieces of process data from a plurality of sensors. Specifically, a neural network is used and for example, process data of continuous processing or batch processing, which is input data, is used as a teacher value to create a model which can compress (encode) and restore (decode) the input data. In the neural network, for example, the number of nodes in an input layer and an output layer corresponds to the number of sensors, and the number of nodes in an intermediate layer is smaller than the number of sensors. Information input to the input layer is compressed in the intermediate layer and restored in the output layer. Note that a plurality of intermediate layers may exist, and the connection structure between the layers is not limited to full connection. Subsequently, learning processing is performed by using the process data at the normal time as training data, and a model is created in which a parameter is adjusted to reduce a difference between a value of the input layer and a value of the output layer. Furthermore, in the abnormality determination processing, process data to be verified is input, and the sensor value abnormality degree in accordance with the difference between the value of the input layer and the value of the output layer is calculated. That is, in a case where abnormal process data is input, information compressed in the intermediate layer cannot be appropriately restored in the output layer and the difference between values of the input layer and the output layer increases, and thus the abnormality detection can be performed based on this difference. According to the autoencoder, an abnormality can be detected based on characteristics of the relationship between the output values of the plurality of sensors.

Graphical Lasso

For example, based on a covariance matrix of pieces of process data from a plurality of sensors in continuous processing or batch processing, dependence between variables is quantified and represented as a sparse graph serving as a reference. At the normal time, it can be determined that the dependence between variables does not greatly deviate from the reference. In the abnormality determination processing, dependence between variables is obtained by using process data to be verified, and the sensor value abnormality degree in accordance with the magnitude of a difference from the above-described reference is calculated. According to the graphical lasso, the correlation between pieces of the process data can be quantified, and the sensor value abnormality degree can be detected based on a collapse of the correlation.

Furthermore, the following processing may be performed by using the image data.

GaussianAD

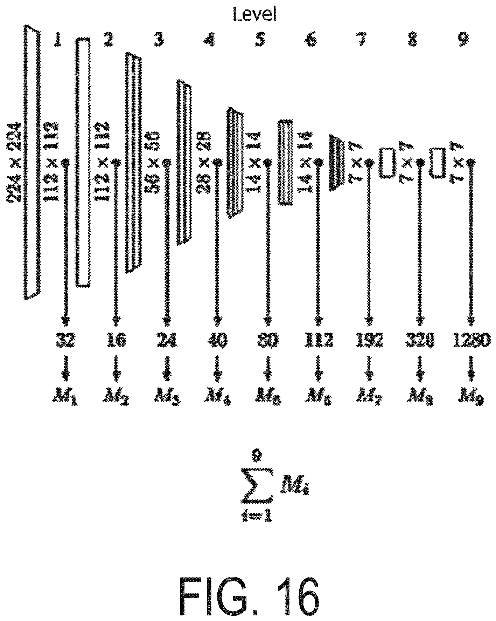

For example, EfficientNet-BO is used to perform learning, using the image data at the normal time as training data. FIG. 16 is a diagram for explaining EfficientNet-B0. EfficientNet-B0 extracts feature vectors corresponding to a plurality of levels by convolutional deep learning. In the plurality of levels, as the size of the pieces of image data gradually decreases, the dimensions called channels increase, and as illustrated in FIG. 16, feature vectors of nine levels in which the number of dimensions ranges from 16 to 1280 are calculated. In the calculation process, the feature vectors are averaged in spatial directions (width and height directions) utilizing Global Average Pooling (GAP), and the dimension is compressed only in the depth (channel) direction. The feature vectors of the plurality of levels may represent features of the image data ranging from a local feature to a global feature. Furthermore, the average of the feature vectors at each level is obtained and stored in the storage device as a model at normal time.

In an operation phase, the feature vectors are similarly obtained for image data being input, and differences $M_i$ between the feature vectors of the plurality of levels and the average of each level (model at normal time) are calculated by the Hotelling method described above. The sum of the differences $M_i$ from the average at each level is calculated as the abnormality degree obtained from an image (image abnormality degree or divergence degree).

Correction of Image Abnormality Degree Based on Gray-Level Co-Occurrence Matrix (GLCM)

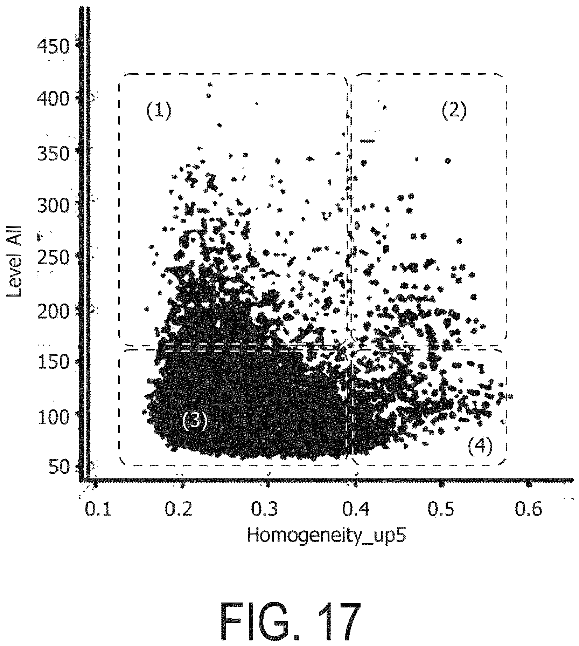

The GLCM is a value representing smoothness of texture of the image data. Based on a relationship with surrounding pixels, statistic values (GLCM features) relating to contrast, correlation, uniformity, or the like can be calculated. FIG. 17 is a graph showing a relationship between GLCM features and the image abnormality degree described above. In the graph of FIG. 17, the vertical axis represents the image abnormality degree, and the horizontal axis represents the GLCM feature. When the image abnormality degree exceeds a predetermined threshold value, it is determined that the image is abnormal. In a region (1) indicated by a dashed line, mainly data is plotted when there is no problem in the state of the product but it is erroneously determined to be abnormal. In a region (2) indicated by a dashed line, mainly data is plotted when the state of the product is abnormal and the abnormality is successfully detected. In a region (3) indicated by a dashed line, mainly data is plotted when there is no problem in the state of the product and it is determined not to be abnormal. In a region (4) indicated by a dashed line, mainly data is plotted when the state of the product is abnormal and the abnormality is not detected. As illustrated in FIG. 17, when the result of the abnormality determination based on GaussianAD is plotted based on the GLCM feature, it is possible to roughly classify on the graph whether the determination is correct or false.

Therefore, the image abnormality degree described above may be corrected by using the GLCM.

Specifically, as indicated by the following equation, a corrected abnormality degree $a_{new}$ is obtained by multiplying an image abnormality degree a obtained by GaussianAD by the GLCM feature (homogeneity) $b^2$.

$$a_{new} = a * b^2$$

According to such a corrected abnormality degree $a_{new}$, it is possible to improve the accuracy of the abnormality determination.

Machine Learning Using Pseudo-Abnormal Image

In general, there are few pieces of image data on a product in an abnormal state in a production plant, and thus, it is difficult to perform supervised learning. Therefore, pseudo-image data at abnormal time is created by using the image data of the product in the normal state, and is used as supervised data. The pseudo-abnormal image data is generated by smoothing the image data at normal time. In the smoothing, for example, blur of Open CV can be utilized to obtain an average of the kernel size 64, but the technique is not particularly limited, as long as the entire image can be processed by blurring processing. Such a pseudo-abnormal image is based on the knowledge of the operator that, when the image data is an image in the retention box 309 (FIG. 4) in which the resin such as the precipitated cellulose acetate is retained, the texture appearing in the image is smooth at abnormal time when the resin is small. Normal images and pseudo-abnormal images are used in learning by a convolutional neural network model VGG16 and the output is used as the image abnormality degree.

Segmentation

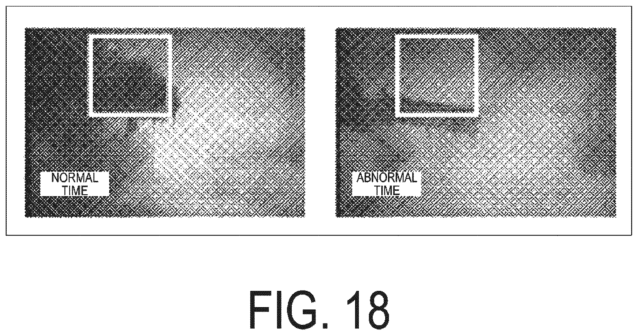

For example, semantic segmentation such as by DeepLab v3+ may be used to estimate, from features of the image data, the amount of the product that is lifted on a stirring blade provided in the retention box 309. FIG. 18 illustrates an example of images in the retention box 309 at the normal time and the abnormal time. In FIG. 18, regions highlighted by a white solid line rectangle include an upper portion of the stirring blade. It can be seen that, in the normal state, the product is lifted by the upper portion of the stirring blade and is sufficiently deposited. On the other hand, at the abnormal time, the amount of the product at the upper portion of the stirring blade is relatively small. In the present technique, the size and the roughness of the deposited product can be determined, and thus, not only the resin but also a compound lifted up by the stirrer can be monitored.

In the segmentation technique, a plurality of pieces of image data (frames) that are continuously output are divided into groups to be used for processing. For example, the rotation period of the stirring blade is used as a basis, and one period is set as a processing unit. Furthermore, the training data is annotated by designating pixels to which the product on the stirring blade is imaged. For example, an existing technique such as SEAM or Affinity Net can be utilized for selecting a region in the annotation. Thus, it is possible to create a model for estimating the amount of the product from the image data. Moreover, in the operation phase, the maximum value of the estimated amount of the product in the above-described one period is determined, and the image abnormality degree is calculated to obtain a higher abnormality degree when the maximum value is smaller. In the segmentation technique, the image abnormality degree is calculated based on the amount of the product, and thus, the basis of the determination is very clear, and an application of the technique to other uses can be expected.

Alternatively, common abnormality detection techniques or techniques based on these may be further used. Furthermore, for a threshold value used for the abnormality detection in each of the techniques, process data and image data actually obtained during the operation of the plant 3 may be used to search for a value by which false determination is suppressed as much as possible at the normal time and occurrence of abnormality or a sign thereof can be quickly detected at the abnormal time, and the value may be registered in the knowledge base illustrated in FIG. 10.

Device Configuration

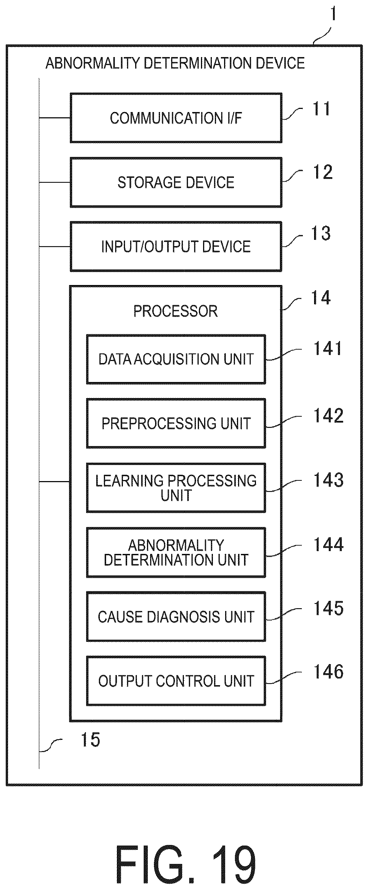

FIG. 19 is a block diagram illustrating an example of a configuration of the abnormal irregularity cause identifying device 1. The abnormal irregularity cause identifying device 1 is a computer and includes a communication interface (I/F) 11, a storage device 12, an input/output device 13, and a processor 14. The communication I/F 11 may be, for example, a network card or a communication module and communicates with another computer based on a predetermined protocol. The storage device 12 may be a main storage device such as a Random Access Memory (RAM) or a Read Only Memory (ROM), and an auxiliary storage device (secondary storage device) such as a Hard-Disk Drive (HDD), a Solid State Drive (SSD), and a flash memory. The main storage device temporarily stores a program to be read by the processor 14 and information transmitted to and received from other computers and secures a work area of the processor 14. The auxiliary storage device stores a program to be executed by the processor 14 and information and the like transmitted to and received from other computers. The input/output device 13 is a user interface, which is, for example, an input device such as a keyboard and a mouse, an output device such as a monitor, an input/output device such as a touch panel, or the like. The processor 14 is an arithmetic processing device such as a Central Processing Unit (CPU) and performs each processing according to the present embodiment by executing the program. In an example of FIG. 19, functional blocks are illustrated in the processor 14. That is, the processor 14 executes a predetermined program to function as a data acquisition unit 141, a preprocessing unit 142, a learning processing unit 143, an abnormality determination unit 144, a cause diagnosis unit 145, and an output control unit 146.

The data acquisition unit 141 acquires process data from a sensor included in the plant 3 via, for example, the communication I/F 11 and the control station 2, acquires image data from the imaging device, and stores the process data and the image data in the storage device 12. As described above, the process data and the image data are associated with the sensor and the imaging device by a tag.

When an abnormality detection model is created, the preprocessing unit 142 processes the process data and the image data. For example, the preprocessing unit 142 associates the process data and the image data with the product serial number. That is, based on the above-described traceability information held in the storage device 12 in advance, the process data and the image data corresponding to a predetermined tag, a system, and a product serial number in the batch processing is associated with process data and image data that corresponds to a predetermined tag and is output at a predetermined timing in the continuous processing. Furthermore, data for a predetermined period of time used in the abnormality determination is extracted based on a set value of a table such as the knowledge base, and a feature amount in accordance with each technique is calculated. Note that in the learning processing, the preprocessing unit 142 may perform data cleansing to exclude data in an unsteady operation period, data at the time of abnormality occurrence, an outlier such as noise, and the like, thereby extracting training data. Furthermore, the preprocessing unit 142 may calculate a predetermined feature amount from the image data or may perform predetermined image processing such as smoothing of the image data.

The learning processing unit 143 creates an abnormality detection model including one or more calculation operations based on the knowledge base, for example, and causes the storage device 12 to store the abnormality detection model. At this time, the learning processing unit 143 determines a parameter based on learning about characteristics of the training data including process data or image data. Note that in a case where the learning processing is performed by using output values of a plurality of sensors, normalization may be performed as appropriate.

The abnormality determination unit 144 may calculate the sensor value abnormality degree by using the process data and the abnormality detection model, and may calculate the image abnormality degree by using the image data and the abnormality detection model. That is, the abnormality determination unit 144 calculates the abnormality degree (that is, the sensor value abnormality degree or the image abnormality degree) by using test data for performing cross validation and the abnormality detection model in the learning processing. Furthermore, in the abnormality determination processing, the abnormality degree is calculated by using the process data or the image data acquired from the plant 3.

The cause diagnosis unit 145 calculates the degree of satisfaction (accuracy) for each of the plurality of assumed causes by using the calculated abnormality degree. For example, the degree of satisfaction is calculated by using the abnormality degree calculated by the abnormality determination unit, and is calculated based on a proportion of influence appearing in the process data or the image data and an extent thereof, among influences associated with each of the assumed causes in the knowledge base. In addition, an action representing a handling to be taken for a cause may be stored in association with each of the assumed causes in the storage device 12, and thus the action can be presented to a user.

The output control unit 146 issues an alarm and outputs a degree of satisfaction for each of the assumed causes in a case where an abnormality is detected, for example, via the input/output device 13. To the output control unit 146, the above components are connected via a bus 15 as appropriate in accordance with an operation by the user. Note that, for convenience, the one device illustrated in FIG. 19 includes the data acquisition unit 141, the preprocessing unit 142, the learning processing unit 143, the abnormality determination unit 144, the cause diagnosis unit 145, and the output control unit 146, but at least a part of the functions may be distributed to a different device.

Learning Processing

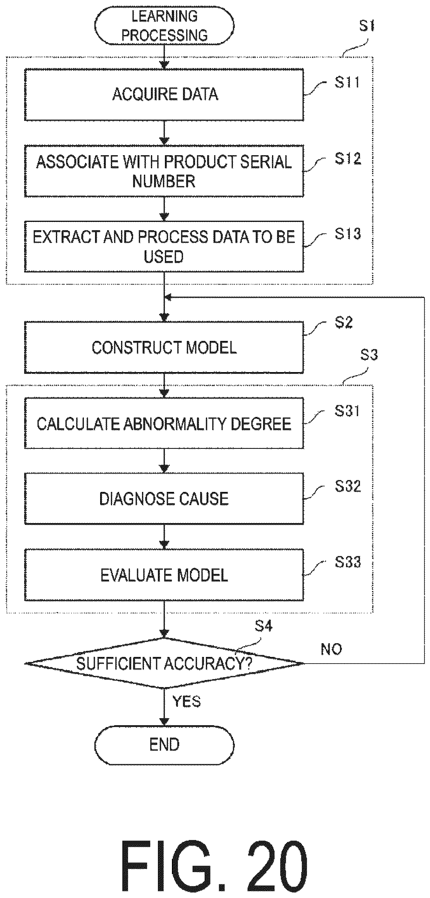

FIG. 20 is a processing flow chart illustrating an example of learning processing performed by the abnormal irregularity cause identifying device 1. The processor 14 of the abnormal irregularity cause identifying device 1 executes a predetermined program to execute the processing as illustrated in FIG. 20. The learning processing is executed at any timing by using the process data or the image data obtained from past operations of the plant 3. Furthermore, the learning processing includes mainly preprocessing (S1 in FIG. 20), model construction processing (S2), and verification processing (S3). That is, some of the pieces of process data or image data may be used as training data and the other pieces may be used as test data to perform cross validation. Note that the table and the like described above are created by a user and are stored in advance in the storage device 12. For convenience, the preprocessing, the learning processing, and the verification processing are described in one processing flow illustrated in FIG. 20, but at least a part such as the preprocessing or the verification processing may be distributed and executed in a different device.

The data acquisition unit 141 of the abnormal irregularity cause identifying device 1 acquires the pieces of process data or image data (S11 in FIG. 20). In the present step, data used in the abnormality detection model is extracted, among the pieces of process data illustrated in FIGS. 4 and 7, for example, among the image data output by the imaging device provided in the retention box 309. The process data is assumed to be stored in the storage device 12 as OPC data, a so-called database table, or a file having a predetermined format such as CSV. The pieces of image data are continuously acquired at a frame rate of 30 fps, for example. Each piece of the image data corresponds to one of the frames and is general raster data. Furthermore, the process data may include attributes such as date and time and a tag, and, in particular, the process data in batch processing may further include attributes such as S/N and a step. It is assumed that image data is also associated with information such as date and time and a tag.

Furthermore, the preprocessing unit 142 of the abnormal irregularity cause identifying device 1 associates each of the process data or image data in the continuous processing with a product serial number (S12 in FIG. 20). In the present step, as illustrated in FIG. 9, the process data or the image data acquired in the continuous stage is associated with a product serial number group of the process data or the image data acquired in the batch processing, and thus, the process data or the image data used in calculating the abnormality degree is associated. That is, in the knowledge base illustrated in FIG. 10 and the logic tree illustrated in FIG. 12, in a case where a cause affects both the process data or the image data in the batch processing and the process data or the image data in the continuous processing, the abnormality degree and the degree of satisfaction are calculated based on the data associated in the present step.

Subsequently, the preprocessing unit 142 extracts and processes data to be used in the abnormality determination model (S13 in FIG. 20). In the present step, the preprocessing unit 142 extracts data in a predetermined period of time to be used in the abnormality determination based on a set value of a table such as the knowledge base and calculates a feature amount in accordance with each technique.

For example, in a case where the abnormality degree is calculated by the Hotelling method, the preprocessing unit 142 extracts the process data in a predetermined timing or time period, calculates an instantaneous value forming the process data, a maximum value, a minimum value, an integrated value, or a difference of the process data, an integrated value of a reaction rate, a derivative at a predetermined time point, and the like, and stores the calculated values in the storage device 12. Furthermore, in a case where the abnormality degree is calculated by the k-nearest neighbor algorithm, the time-series process data is vectorized or converted into a matrix. In a case where the abnormality degree is calculated by the DTW Barycenter Averaging, synchronization processing is performed on a plurality of pieces of process data to obtain average time-series data. In a case where the abnormality degree is calculated by the autoencoder or the graphical lasso, synchronization processing is performed on a plurality of pieces of process data. In a case where the abnormality degree is calculated based on the image data, predetermined image processing may be performed or a feature vector may be calculated.

Note that the preprocessing unit 142 may perform predetermined data cleansing for the process data. The data cleansing processing is processing for excluding an outlier, and various techniques can be employed. For example, latest data may be used to calculate a moving average value. Furthermore, a difference between the moving average value and a measured value is taken, and a standard deviation $\sigma$ representing a variation in the difference is obtained. Then, a value that does not fall within a predetermined confidence interval, such as an interval from the mean of the probability distribution - $3\sigma$ to the mean of the probability distribution + $3\sigma$ (also referred to as a $3\sigma$ interval), may be excluded. Likewise, a value that does not fall within the $3\sigma$ interval may be excluded for the difference between measured values before and after.

Thereafter, the learning processing unit 143 of the abnormal irregularity cause identifying device 1 performs abnormality detection model construction processing (S2 in FIG. 20). In the present step, based on the knowledge base illustrated in FIG. 10, an abnormality detection model including calculation of an abnormality degree is created. Specifically, for each of one or more "influences" associated with a corresponding one of the "assumed causes" in FIG. 10, the abnormality degree is calculated by the technique registered in a corresponding one of the "calculation methods" to create the abnormality detection model represented by the combination of abnormality degrees. In addition, the learning processing unit 143 adjusts parameters of the model by using the training data depending on the type of abnormality detection technique. For example, in a case where the sensor value abnormality degree is calculated by the autoencoder, a weight factor between layers is adjusted in such a manner that the information of the input process data can be restored after compression. In a case where the sensor value abnormality degree is calculated by the graphical lasso, the dependence between variables is quantified based on the covariance matrix of the pieces of process data from a plurality of sensors. The image abnormality degree is calculated based only on the image data. However, the cause of the abnormal irregularity can be determined by using a combination of the calculated image abnormality degree and another abnormality degree. Then, the learning processing unit 143 stores the created abnormality detection model in the storage device 12.

The abnormality determination unit 144 of the abnormal irregularity cause identifying device 1 calculates the abnormality degree by using the created abnormality detection model and the test data (S31 in FIG. 20). In the present step, the abnormality determination unit 144 calculates the abnormality degree in accordance with the techniques of calculating the abnormality degree. For example, in a case where the abnormality degree is calculated by the Hotelling method, the sample average and the sample standard deviation of the population are estimated by using the process data, and the abnormality degree is obtained based on the distance from the average of the population to the process data to be verified. In a case where the abnormality degree is calculated by the k-nearest neighbor algorithm, distances between pieces of the data are calculated, and the abnormality degree in accordance with the distance between the data to be verified and the k-th nearest data from the data to be verified is calculated. In a case where the abnormality degree is calculated by the DTW Barycenter Averaging, the abnormality degree is obtained by the k-nearest neighbor algorithm or the Hotelling theory based on the integrated value of distances between pieces of the time-series data synchronized in the preprocessing. In a case where the abnormality degree is calculated by the autoencoder, the process data to be verified is input to the autoencoder, and the abnormality degree in accordance with the difference between a value of the input layer and a value of the output layer is obtained. In a case where the abnormality degree is calculated by the graphical lasso, the process data to be verified is used to obtain dependence between variables, and the abnormality degree in accordance with a magnitude of the difference between the obtained dependence and dependence serving as a reference is obtained. In a case where the image abnormality degree is calculated, for example, the above-described technique is used to calculate the image abnormality degree by using the feature amount of the captured image data and a model obtained by learning a tendency of the feature amount of the image data of the product in the normal state.

The cause diagnosis unit 145 of the abnormal irregularity cause identifying device 1 obtains the degree of satisfaction of the assumed cause by using the calculated abnormality degree (S32 in FIG. 20). In the present step, for each of the assumed causes of the knowledge base, the degree of satisfaction is calculated based on a proportion in which irregularity associated as an influence appears. For example, three influences, that is, an increase of the flow rate of a tag 001, a decrease of a temperature 2 of a tag 005, and a resin size of a tag 009 that is smaller than a predetermined reference, are associated with a cause (1) of FIG. 10. As described above, the sensor value abnormality degree is calculated as a value in accordance with the positive or negative direction. In addition to the above-described model for calculating the abnormality degree in the case where the size of the resin is smaller than the reference, a model for calculating the image abnormality degree in a case where the size of the resin is larger than the reference may also be created to detect the abnormality in both the positive and negative directions. By using the abnormality degree calculated for each of the influences in S31 in FIG. 20, a proportion of influences whose abnormality degree exceeds a threshold value among the three influences may be used as the degree of satisfaction in S32 of FIG. 20. In a case where the abnormality degrees of two influences of the three influences exceeds the threshold value, for example, the degree of satisfaction can be 66.7%. Alternatively, in calculating the degree of satisfaction, weighting may be further performed depending on the type of influence (tag) or based on the magnitude of the abnormality degree. For example, as the degree of satisfaction, each influence may be multiplied by a weight and then the sum of the multiplication results may be obtained.

Furthermore, the output control unit 146 outputs the abnormality degree calculated in S31 and the degree of satisfaction calculated in S32 for the user to evaluate the created model (S33 in FIG. 20). In the present step, the cross validation is performed using test data that is different from the training data used for construction of the model, among the pieces of process data collected from past operations of the plant 3. In addition, in the present step, the process data at the time when an abnormality occurred in the past is also used to verify whether an abnormality is appropriately detected and an alarm or an action to handle the abnormality is output. Furthermore, the learning processing unit 143 determines whether an abnormality can be detected with sufficient accuracy (S4 in FIG. 20). In a case where it is determined that the accuracy is insufficient (S4: NO), the threshold value registered in the knowledge base (in other words, a normal range of the process data) is modified in such a manner that the abnormality can be detected appropriately, and the processing after S31 is repeated. In a case where it is determined that the abnormality can be detected with sufficient accuracy in S4 (S4: YES), an operation is performed that uses the abnormality detection model created in S2 and the threshold value. Note that at least a part of determination in S4 may be made by a user.

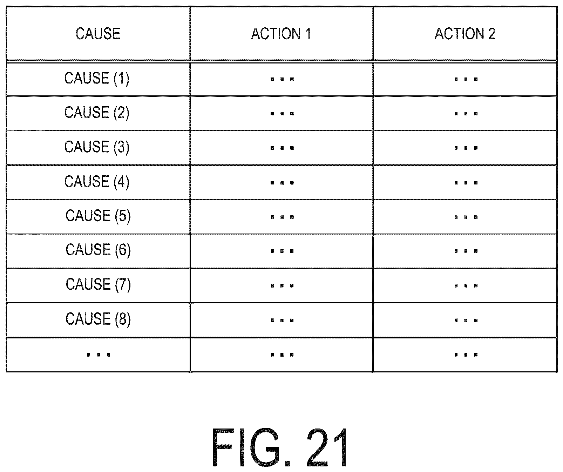

Note that for the action, for example, in association with an assumed cause, an action to be performed by an operator of the plant 3 to handle the cause is assumed to be stored in the storage device 12 in advance. FIG. 21 is a table showing an example of an action table. The table in FIG. 21 includes attributes of a cause, an action 1, and an action 2. In the field of the cause, a cause corresponding to the assumed cause in the knowledge base is registered. In the fields of the action 1 and the action 2, information indicating a procedure to be undertaken by the operator of the plant 3 to eliminate a corresponding cause is registered.

Abnormality Detection Processing

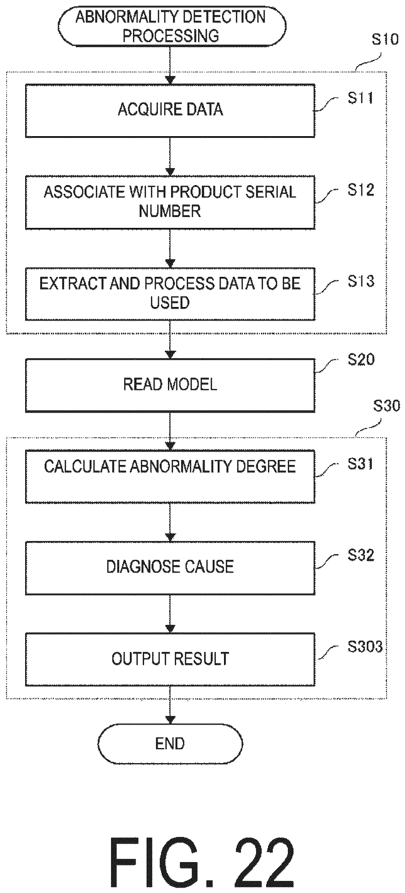

FIG. 22 is a processing flow chart illustrating an example of the abnormality detection processing performed by the abnormal irregularity cause identifying device 1. The processor 14 of the abnormal irregularity cause identifying device 1 executes a predetermined program to perform the processing illustrated in FIG. 22. The abnormality detection processing is substantially performed in real time by using process data or image data obtained during operation of the plant 3. The abnormality detection processing mainly includes preprocessing (S10 in FIG. 22), model reading processing (S20), and abnormality determination processing (S30). In FIG. 22, the same reference signs are given to the stages corresponding to the learning processing illustrated in FIG. 20, and a difference from the learning processing is mainly described below. For convenience, description will be given of the same device as the device for performing the learning processing, but the device for performing the abnormality detection processing may be different from the device for performing the learning processing. Furthermore, the abnormality detection model created in the learning processing, the threshold value, and the table such as the knowledge base are assumed to be stored in the storage device 12 in advance.

The data acquisition unit 141 of the abnormal irregularity cause identifying device 1 acquires the process data or the image data (S11 in FIG. 22). The process data is assumed to be stored in the storage device 12 as OPC data, a so-called database table, or a file having a predetermined format such as CSV. The image data is, for example, raster data output at a frame rate of 30 fps. The present step is substantially similar to S11 in FIG. 20, but pieces of data regarding the processes during operation in the plant 3 are acquired. Furthermore, the preprocessing unit 142 of the abnormal irregularity cause identifying device 1 associates each of the pieces of process data in the continuous processing with a corresponding one of product serial numbers (S12 in FIG. 22). The present step is similar to S12 in FIG. 20. The preprocessing unit 142 extracts and processes data to be used in the abnormality determination model (S13 in FIG. 22). The present step is substantially similar to S13 in FIG. 20, but there is no need to perform data cleansing.

Thereafter, the abnormality determination unit 144 of the abnormal irregularity cause identifying device 1 reads the abnormality detection model created in the learning processing from the storage device 12 (S20 in FIG. 22). Furthermore, the abnormality determination unit 144 uses the created abnormality detection model and the process data and image data obtained from the operation of the plant 3 to calculate the abnormality degree (S31 in FIG. 22). The present step is similar to S31 in FIG. 20. Furthermore, the cause diagnosis unit 145 of the abnormal irregularity cause identifying device 1 uses the calculated abnormality degree to obtain the degree of satisfaction of the assumed cause (S32 in FIG. 22). The present step is similar to S32 in FIG. 20.

Furthermore, the output control unit 146 outputs the abnormality degrees calculated in S31 and the degree of satisfaction calculated in S32 and issues an alarm when any of the abnormality degrees exceeds a predetermined threshold value (S303 in FIG. 22). In the present step, the process data, the abnormality degree, and the degree of satisfaction of the assumed cause, which indicate the operation state of the plant 3, are presented to the user via the input/output device 13.

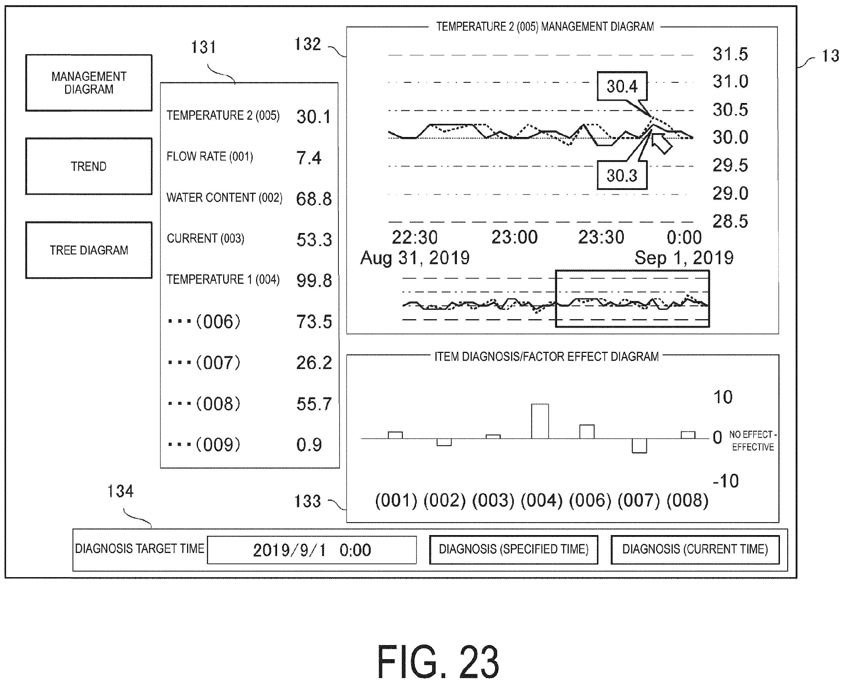

FIG. 23 is a diagram illustrating an example of a screen output to the input/output device 13. FIG. 23 is an example of a main management diagram, in which transition of individual process data is shown in a line graph. A region 131 displayed at the input/output device 13 displays a plurality of combinations of identification information of the process data acquired from the plant 3 and the latest value. The management diagram of a region 132 shows the transition of values for specific process data in a line graph. Note that the vertical axis represents the value of the process data, and the horizontal axis represents the time axis. Furthermore, in the example of FIG. 23, a solid line represents a true value, and the dashed line represents an estimated value. Note that the true value may be the process data for which the abnormality degree is to be calculated, and the estimated value may be a value estimated by regression analysis of the process data for which the abnormality degree is to be calculated. The thin dashed lines represent an upper limit and a lower limit of the normal range (in other words, threshold values in the abnormality detection). Note that, as illustrated by balloons in FIG. 23, in a case where a user operates the input/output device 13 such as a pointing device to move a pointer onto the graph, a numerical value of the process data at the time point indicated by the pointer may be displayed. In a factor effect diagram of a region 133, a cause of irregularity of the process data displayed in the region 132 or a tag that can identify the cause is displayed on the horizontal axis, and the vertical axis represents the degree of satisfaction of the cause in a bar graph. It can be seen that, if the degree of satisfaction is higher, a cause of irregularity of the process data has higher probability. In addition, the cause diagnosis unit 145 calculates the degree of satisfaction based on the abnormality degree calculated by the abnormality determination unit 144 for an event serving as the assumed cause of irregularity of the process data. The user can recognize a candidate of the cause of the irregularity and an accuracy thereof based on the magnitude of the degree of satisfaction and can easily identify the cause of irregularity. In addition, in a case where a "diagnosis" button of a region 134 is pressed, the abnormality determination unit 144 calculates the abnormality degree at a specified time or the current time, and the factor effect diagram is displayed by the output control unit 146. Then, in a case where the user operates the input/output device 13 such as a pointing device and selects any one of the bar graphs in the factor effect diagram, the cause of irregularity corresponding to the bar graph is highlighted in the logic tree.

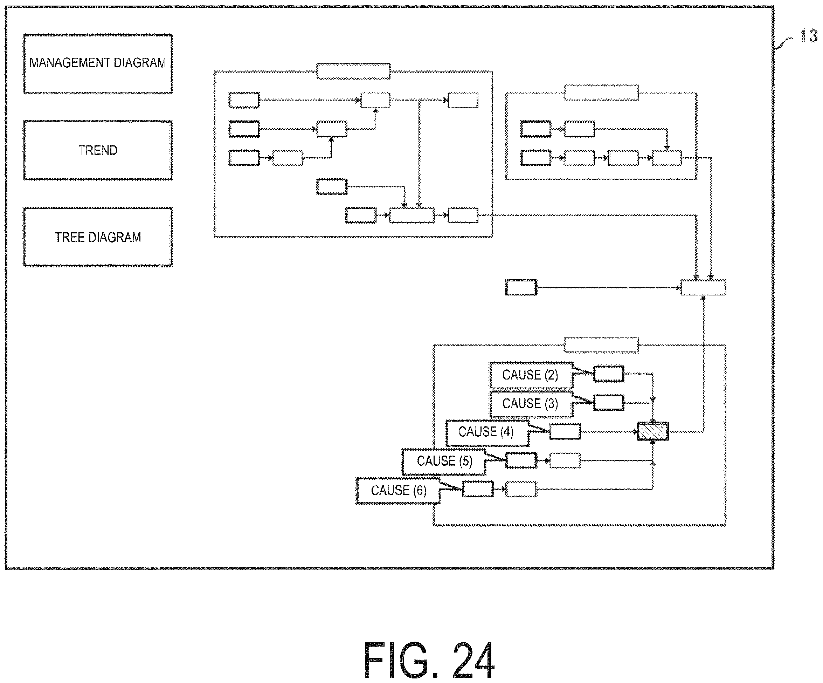

FIG. 24 is a diagram illustrating another example of the screen output to the input/output device 13 by the output control unit 146. FIG. 24 is an example of a tree diagram, and a logic tree as illustrated in FIG. 11 is displayed. For example, in a case where a bar graph of the tag 004 is selected in FIG. 23, an influence corresponding to the process data having the tag 004 is highlighted in the logic tree. The highlighted display is obtained by changing the display mode, for example, changing the color, the line type, or the like. In FIG. 24, a corresponding rectangle is hatched. Furthermore, the thick-line rectangles connected to the upstream side of the logic tree represent assumed causes of an influence. Each cause may be displayed as illustrated by balloons in FIG. 24, or an influence on the process data other than the cause may be displayed. Note that the degree of satisfaction of each cause calculated in S32 of FIG. 22 may be further displayed, and an action may be further displayed. Alternatively, the cause may be displayed when a user moves a pointer onto each rectangle.

Note that, in a case where a "trend" button illustrated in FIGS. 23 and 24 is depressed, a process trend of each tag listed in the factor effect diagram may be displayed. In particular, a process trend of a tag that can identify the cause of the irregularity may be displayed. In the process trend, values per periods of time, for example, per predetermined hours, per predetermined days, per predetermined months, or per season, are calculated by using the pieces of process data stored in the storage device 12 and are plotted on the graph.

Furthermore, the output control unit 146 may output a log of the abnormality degree at a timing when the abnormality degree calculated by each calculation method exceeds a predetermined threshold value, for example. Furthermore, the log of the assumed cause or the degree of satisfaction may be output. Each log can facilitate analysis of abnormal irregularity by associating and outputting a date and time, the product serial number, the calculation method, the abnormality detection model, and the like.

Modified Example

Note that each of the configurations, combinations thereof, and the like in each of the embodiments are an example, and various additions, omissions, substitutions, and other changes may be made as appropriate without departing from the spirit of the present disclosure. The present disclosure is not limited by the embodiments and is limited only by the claims. Each aspect disclosed in the present specification can be combined with any other feature disclosed herein.

The above-described degree of satisfaction may be determined using only one or more image abnormality degrees. However, the accuracy of the abnormality determination can be improved by combining the image abnormality degree and the sensor value abnormality degree as in the above-described embodiment. In particular, if an abnormal irregularity in the amount of the product in the retention box can be detected at an early stage, it is possible to present an operating condition for obtaining an optimum bulk density. For example, the size of the resin can be adjusted by the flow rate of the acid being used, to suppress clogging of the apparatus and deterioration of the product quality.

In addition to a high-molecular compound such as a resin, the product produced by the plant may also be a low-molecular compound. For example, the abnormality degree of a granular compound can be obtained. Furthermore, the above-described embodiment has been described by using a chemical plant as an example. However, the embodiment can be applied to a manufacturing process in a general production facility. For example, instead of the product serial number of the batch stage in the embodiment, a lot number can be used as a transaction, and the processing according to the batch stage in the embodiment may be applied. Furthermore, the image abnormality degree may be applied not only to the analysis of the amount or size of a product, but also to the analysis of a cell shape or a fiber structure, the analysis of wrinkles or sagging, the detection of cracks in metal or concrete, the analysis of a crystal shape, the detection of a contaminant, and the like.

At least some of the functions of the abnormal irregularity cause identifying device 1 may be implemented by being distributed in a plurality of devices, or the same function may be provided by a plurality of devices in parallel. Furthermore, at least some of the functions of the abnormal irregularity cause identifying device 1 may be provided on a so-called cloud.

Furthermore, the present disclosure includes a method and a computer program for performing the aforementioned processing, and a computer readable recording medium storing the program. The recording medium on which the program is stored enables the aforementioned processing by causing a computer to execute the program.

The computer readable recording medium refers to a recording medium that can accumulate information such as data or programs by electrical, magnetic, optical, mechanical, or chemical actions and can be read from a computer. Among such recording media, examples of recording media detachable from a computer include flexible disks, magneto-optical disks, optical disks, magnetic tapes, memory cards, and the like. Furthermore, as recording media fixed to a computer, there are HDD, Solid State Drive (SSD), ROM, and the like.

Reference Signs List

1: Abnormal irregularity cause identifying device (abnormality detection device)
11: Communication I/F
12: Storage device
13: Input/output device
14: Processor

141: Data acquisition unit
142: Preprocessing unit
143: Learning processing unit
144: Abnormality determination unit
145: Cause diagnosis unit
146: Output control unit
2: Control Station
3: Plant

**Claims**

1. An abnormality detection device, comprising:

   a data acquisition unit configured to read, from a storage device storing image data being continuously output by an imaging device included in a production facility and process data being continuously output by a sensor included in the production facility, the image data and the process data;
   an abnormality determination unit configured to calculate an image abnormality degree by using a model obtained by learning a tendency of a feature amount of image data in a normal state of the image data and a feature amount of the image data acquired by the data acquisition unit, and calculate a sensor value abnormality degree indicating a degree of irregularity of the process data read by the data acquisition unit; and
   a cause diagnosis unit configured to output, based on causal relation information defining an association of a causal relation between a cause and a combination of the sensor value abnormality degree and the image abnormality degree, the cause corresponding to the sensor value abnormality degree and the image abnormality degree calculated by the abnormality determination unit.

2. The abnormality detection device according to claim 1, wherein

   the production facility is a manufacturing plant of a granular product, and
   the imaging device is provided in a tank of the manufacturing plant.

3. The abnormality detection device according to claim 1 or 2, wherein

   the abnormality determination unit is configured to
   use the image data to output, by a convolutional deep learning model that outputs feature amounts of a plurality of levels from a local feature to a global feature, the feature amounts of the plurality of levels; and
use a model obtained by learning an average of a feature amount in a normal state for each of the plurality of levels by using a plurality of pieces of the image data in the normal state, to calculate, as the image abnormality degree, a corrected abnormality degree obtained by correcting, based on smoothness of texture of the image data read by the data acquisition unit, a divergence degree based on a difference between the feature amount of each of the plurality of levels and the average of the feature amount of a corresponding level.

4. The abnormality detection device according to claim 3, wherein

   the convolutional deep learning model is EfficientNet,
   the divergence degree is calculated by GaussianAD, and
   the corrected abnormality degree is calculated by multiplying the divergence degree by a value based on a Gray-Level Co-Occurrence Matrix (GLCM).

5. The abnormality detection device according to claim 1 or 2, wherein
   the model is created by using a pseudo-abnormal image created by smoothing the image data in the normal state.

6. The abnormality detection device according to claim 2, wherein

   the model is generated by learning a feature of a region in which an image of the product on a stirring blade provided in the tank is captured, and estimates a region in which an image of the product is captured in the image data by using segmentation, and
   the abnormality determination unit obtains a maximum value of a size of a region in which an image of the product is captured on a rotation period basis of the stirring blade, and determines that the smaller the maximum value is, the higher the image abnormality degree is.

7. The abnormality detection device according to any one of claims 1 to 6, wherein
   the abnormality determination unit calculates the sensor value abnormality degree in accordance with whether a direction of divergence with respect to a predetermined reference is positive or negative.

8. The abnormality detection device according to any one of claims 1 to 7, wherein

the causal relation information defines process data to be used for calculation of the sensor value abnormality degree, by a timing, a period of time, or an interval in a stage performed at the production facility for each piece of the process data output by the sensor, and

the abnormality determination unit calculates the sensor value abnormality degree by using a value extracted based on the timing, the period of time, or the interval defined by the causal relation information from among pieces of the process data read by the data acquisition unit.

9. An abnormality detection method executed by a computer, the abnormality detection method comprising:

reading, from a storage device storing image data continuously output by an imaging device included in a production facility, the image data;
reading, from a storage device storing process data continuously output by a sensor included in the production facility, the process data;
calculating an image abnormality degree by using a model obtained by learning a tendency of a feature amount of image data in a normal state of the image data and a feature amount of the image data being read, and calculating a sensor value abnormality degree indicating a degree of irregularity of the process data being read; and
outputting, based on causal relation information defining an association of a causal relation between a cause and a combination of the sensor value abnormality degree and the image abnormality degree, the cause corresponding to the sensor value abnormality degree and the image abnormality degree being calculated.

10. An abnormality detection program causing a computer to execute:

reading, from a storage device storing image data continuously output by an imaging device included in a production facility, the image data;
reading, from a storage device storing process data continuously output by a sensor included in the production facility, the process data;
calculating an image abnormality degree by using a model obtained by learning a tendency of a feature amount of image data in a normal state of the image data and a feature amount of the image data being read, and calculating a sensor value abnormality degree indicating a degree of irregularity of the process data being read; and
outputting, based on causal relation information defining an association of a causal relation between a cause and a combination of the sensor value abnormality degree and the image abnormality degree, the cause corresponding to the sensor value abnormality degree and the image abnormality degree being calculated.

FIG. 1

FIG. 2

FIG. 3

FIG. 4

| SEQUENCE | STAGE | S/N | STEP | PRODUCT TYPE |
|----------|-------|-----|------|--------------|
| #1 | PRETREATMENT | 001 | ST11 | F11 |
| #1 | PRECOOLING | 002 | ST12 | F12 |
| #1 | REACTION | 003 | ST13 | F13 |
| #1 | AGING | 004 | ST14 | F14 |
| #2 | PRETREATMENT | 001 | ST21 | F21 |
| . . . | . . . | . . . | . . . | . . . |

# FIG. 5

| TAG | SEQUENCE | STAGE | COLLECTION INTERVAL [s] |
|---|---|---|---|
| 001 | #1 | PRETREATMENT | 10 |
| 002 | #1 | PRETREATMENT | 10 |
| 003 | #1 | PRETREATMENT | 10 |
| 004 | #1 | PRETREATMENT | 10 |
| 005 | #1 | PRECOOLING | 10 |
| 006 | #1 | PRECOOLING | 10 |
| . . . | . . . | . . . | . . . |

# FIG. 6

FIG. 7

| SAMPLING INTERVAL | RESIDENCE TIME |
|---|---|
| . . . | . . . |

# FIG. 8

FIG. 9

(TIME)

RESIDENCE TIME FROM BATCH STAGE COMPLETION TO SAMPLING POSITION

TIME OF MEASUREMENT OF SENSING DATA (1)

TIME OF MEASUREMENT OF SENSING DATA (2)

CORRESPONDING SEQUENCE/PRODUCT SERIAL NUMBER (1)

CORRESPONDING SEQUENCE/PRODUCT SERIAL NUMBER (2)

(PROCESS DATA OF CONTINUOUS STAGE)

(COMPLETION TIMING OF BATCH STAGE)

| | | INFLUENCE | | | | | | | |
|---|---|---|---|---|---|---|---|---|---|
| SENSOR | | FLOW RATE | WATER CONTENT | CURRENT | TEMPERATURE 1 | TEMPERATURE 2 | ... | RESIN SIZE | ... |
| TAG | | 001 | 002 | 003 | 004 | 005 | ... | 009 | ... |
| ASSUMED CAUSE | CAUSE (1) | DOWN | | | | DOWN | ... | SMALLER | ... |
| | CAUSE (2) | | UP | | UP | DOWN | ... | SMALLER | ... |
| | CAUSE (3) | | | UP | UP | DOWN | ... | SMALLER | ... |
| | CAUSE (4) | | | | UP | DOWN | ... | SMALLER | ... |
| | CAUSE (5) | | | | UP | DOWN | ... | SMALLER | ... |
| | CAUSE (6) | | | | UP | DOWN | ... | SMALLER | ... |
| | CAUSE (7) | | UP | DOWN | | | ... | SMALLER | ... |
| | CAUSE (8) | UP | | DOWN | | | ... | SMALLER | ... |
| | ... | ... | ... | ... | ... | ... | ... | ... | ... |
| CALCULATION METHOD | | H | k | DTW | AE | glasso | ... | GaussianAD GLCM | ... |
| EXTRACTION TIMING | | ... | ... | ... | ... | ... | ... | ... | ... |
| THRESHOLD VALUE | | ... | ... | ... | ... | ... | ... | ... | ... |
| ... | | ... | ... | ... | ... | ... | ... | ... | ... |

# FIG. 10

FIG. 11

FIG. 12

FIG. 13

FIG. 14

FIG. 15

(LEARNING PROCESSING)
COMPARISON/ PARAMETER UPDATE

(ABNORMALITY DETERMINATION PROCESSING)
COMPARISON/ ABNORMALITY DEGREE CALCULATION

INPUT

OUTPUT

INPUT
TAG 001
TAG 002
TAG 003

OUTPUT
TAG 001
TAG 002
TAG 003

TAG 001
TAG 002
TAG 003

INPUT
TAG 001
TAG 002
TAG 003

OUTPUT
TAG 001
TAG 002
TAG 003
ABNORMALITY DEGREE

EP 4 459 404 A1

FIG. 16

34

FIG. 17

NORMAL
TIME

ABNORMAL
TIME

# FIG. 18

1

ABNORMALITY DETERMINATION DEVICE

COMMUNICATION I/F — 11

STORAGE DEVICE — 12

INPUT/OUTPUT DEVICE — 13

PROCESSOR — 14

DATA ACQUISITION UNIT — 141

PREPROCESSING UNIT — 142

LEARNING PROCESSING UNIT — 143

ABNORMALITY DETERMINATION UNIT — 144

CAUSE DIAGNOSIS UNIT — 145

OUTPUT CONTROL UNIT — 146

15

# FIG. 19

FIG. 20

| CAUSE | ACTION 1 | ACTION 2 |
|---|---|---|
| CAUSE (1) | . . . | . . . |
| CAUSE (2) | . . . | . . . |
| CAUSE (3) | . . . | . . . |
| CAUSE (4) | . . . | . . . |
| CAUSE (5) | . . . | . . . |
| CAUSE (6) | . . . | . . . |
| CAUSE (7) | . . . | . . . |
| CAUSE (8) | . . . | . . . |
| . . . | . . . | . . . |

# FIG. 21

ABNORMALITY DETECTION
PROCESSING

S10

ACQUIRE DATA — S11

ASSOCIATE WITH PRODUCT SERIAL
NUMBER — S12

EXTRACT AND PROCESS DATA TO BE
USED — S13

READ MODEL — S20

S30

CALCULATE ABNORMALITY DEGREE — S31

DIAGNOSE CAUSE — S32

OUTPUT RESULT — S303

END

# FIG. 22

FIG. 23

FIG. 24

## INTERNATIONAL SEARCH REPORT

| International application No. |
|---|
| **PCT/JP2022/047718** |

### A. CLASSIFICATION OF SUBJECT MATTER

*G05B 23/02*(2006.01)i; *G01M 99/00*(2011.01)i; *G06N 20/00*(2019.01)i; *G06N 3/02*(2006.01)i
FI:  G05B23/02 302Y; G05B23/02 302R; G01M99/00 Z; G06N3/02; G06N20/00

According to International Patent Classification (IPC) or to both national classification and IPC

### B. FIELDS SEARCHED

Minimum documentation searched (classification system followed by classification symbols)

G05B23/02; G01M99/00; G06N20/00; G06N3/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/241580 A1 (DAICEL CORPORATION) 02 December 2021 (2021-12-02) <br> paragraphs [0039]-[0045], fig. 1-20 | 1-10 |
| Y | JP 2013-191185 A (MITSUBISHI ELECTRIC CORP) 26 September 2013 (2013-09-26) <br> claims, paragraphs [0024]-[0036], fig. 6-9 | 1-10 |
| Y | JP 2020-95719 A (FISHER ROSEMOUNT SYSTEMS INC) 18 June 2020 (2020-06-18) <br> paragraphs [0065]-[0067] | 3-4 |
| Y | CN 103257366 A (CHINA PETROLEUM & CHEMICAL CORPORATION) 21 August 2013 (2013-08-21) <br> paragraph [0022] | 6-8 |
| A | JP 2020-102130 A (TOSHIBA MITSUBISHI-ELECTRIC INDUSTRIAL SYSTEMS CORPORATION) 02 July 2020 (2020-07-02) <br> entire text, all drawings | 1-10 |
| A | JP 2018-109851 A (MITSUBISHI HITACHI POWER SYSTEMS, LTD.) 12 July 2018 (2018-07-12) <br> entire text, all drawings | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 March 2023** | **14 March 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

### INTERNATIONAL SEARCH REPORT
**Information on patent family members**

International application No.

**PCT/JP2022/047718**

| Patent document cited in search report | | | Publication date (day/month/year) | Patent family member(s) | | | Publication date (day/month/year) |
|---|---|---|---|---|---|---|---|
| WO | 2021/241580 | A1 | 02 December 2021 | (Family: none) | | | |
| JP | 2013-191185 | A | 26 September 2013 | (Family: none) | | | |
| JP | 2020-95719 | A | 18 June 2020 | US | 2020/0192319 | A1 | |
| | | | | paragraphs [0072]-[0074] | | | |
| | | | | GB | 2584509 | A | |
| | | | | DE | 102019134312 | A1 | |
| | | | | CN | 111324093 | A | |
| CN | 103257366 | A | 21 August 2013 | (Family: none) | | | |
| JP | 2020-102130 | A | 02 July 2020 | CN | 111367240 | A | |
| | | | | TW | 202024828 | A | |
| JP | 2018-109851 | A | 12 July 2018 | US | 2019/0384275 | A1 | |
| | | | | entire text, all drawings | | | |
| | | | | WO | 2018/123144 | A1 | |
| | | | | TW | 201823896 | A | |
| | | | | CN | 110023862 | A | |

Form PCT/ISA/210 (patent family annex) (January 2015)

**EP 4 459 404 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018109851 A